# FASCICULE DE BREVET EUROPEEN

(11) **EP 1 713 333 B1**
(45) Date de publication et mention de la délivrance du brevet: **13.11.2013**
(21) Numéro de dépôt: 05717585.3
(22) Date de dépôt: 09.02.2005
(51) Int. Cl.: A01N 43/08, A01N 43/12, A01N 63/04, A01P 21/00, A01G 1/04, C05F 11/08

(54) **MODULATEURS DE DEVELOPPEMENT DES CHAMPIGNONS MYCORHIZIENS A ARBUSCULES, ET APPLICATIONS**
MODULATOREN DER ENTWICKLUNG VON ARBUSKULÄREN MYKORRHIZA-PILZEN UND IHRE VERWENDUNGEN
MODULATORS OF THE DEVELOPMENT OF MYCHORRIZAL FUNGI WITH ARBUSCULES, AND USES THEREOF

(30) Priorité: 10.02.2004 FR 0401282
(43) Date de publication de la demande: 25.10.2006
(73) Titulaire: UNIVERSITE PAUL SABATIER TOULOUSE III, 31062 Toulouse Cedex 4 (FR); Centre National de la Recherche Scientifique (C.N.R.S.), 75016 Paris (FR)
(72) Inventeur: BECARD, Guillaume, F-31450 Odars (FR); ROUX, Christophe, F-31810 Le Vernet (FR); SEJALON-DELMAS, Nathalie, F-31560 Nailloux (FR); PUECH, Virginie, F-31400 Toulouse (FR); ROY, Sébastien, F-31130 Balma (FR)
(74) Mandataire: Cabinet BARRE LAFORGUE & associés
(86) Numéro de dépôt international: PCT/FR2005/000284
(87) Numéro de publication internationale: WO 2005/077177

(56) Documents cités:
- WO-A-91/07868
- WO-A-97/28150
- BECARD G. AND PICHE Y.: "Fungal Growth stimulation by CO2 and Roots exudates in Vescicular-Arbuscular Mycorrhizial Symbiosis" APPLIED AND ENVIRONMENTAL MICROBIOLOGY, vol. 55, no. 9, septembre 1989 (1989-09), pages 2320-2325, XP009036591 cité dans la demande
- ELIAS K.S. AND SAFIR,G.R.: APPLIED AND ENVIRONMENTAL MICROBIOLOG, vol. 53, no. 8, août 1987 (1987-08), pages 1928-1933, XP009036589 cité dans la demande
- NEFKENS GERARD H L ET AL: "Synthesis of a phthaloylglycine-derived strigol analogue and its germination stimulatory activity toward seeds of the parasitic weeds Striga hermonthica and Orobanche crenata" JOURNAL OF AGRICULTURAL AND FOOD CHEMISTRY, vol. 45, no. 6, 1997, pages 2273-2277, XP002296378 ISSN: 0021-8561 cité dans la demande
- YOKOTA TAKAO ET AL: "Alectrol and orobanchol, germination stimulants for Orobanche minor, from its host red clover" PHYTOCHEMISTRY (OXFORD), vol. 49, no. 7, décembre 1998 (1998-12), pages 1967-1973, XP002296379 ISSN: 0031-9422 cité dans la demande

## Description

L'invention concerne la culture des végétaux terrestres et celle des champignons mycorhiziens à arbuscules. Elle vise plus particulièrement les techniques utilisées pour stimuler la croissance et le développement des champignons mycorhiziens à arbuscules et/ou pour stimuler la mycorhization et le développement des plantes d'intérêt agronomique et/ou forestier.

Bon nombre de plantes terrestres, dès le stade juvénile, vivent en symbiose avec des micro-organismes qui leur sont associés au niveau des racines. Parmi ces micro-organismes, les champignons mycorhiziens à arbuscules (champignons MA), aussi désignés "champignons vésiculaires et arbusculaires" (champignons VAM), établissent avec certaines plantes, dites plantes hôtes, une interaction intime assurant le fonctionnement mutualiste de la symbiose. L'établissement d'une telle symbiose entre une plante et les champignons mycorhiziens est appelé mycorhization.

Les champignons MA font parti d'un groupe de champignons archaïques, les Glomeromycota, dont les ancêtres seraient à l'origine des groupes modernes Ascomycota et Basidiomycota (Schussler et al., Mycological Research, 2001, 105:1413-1421).

Sûrement présents lors de l'apparition des premiers végétaux terrestres, les ancêtres des Glomeromycota auraient contribué à l'acclimatation des végétaux au milieu terrestre, assurant aux plantes un apport en eau et en sels minéraux plus efficace. Par co-évolution (bio-radiations évolutives), les champignons MA auraient acquis au cours de l'évolution l'aptitude à interagir avec un nombre croissant de plantes, dites plantes hôtes. On estime actuellement que plus de 80 % des espèces végétales terrestres sont associées aux champignons mycorhiziens à arbuscules, parmi lesquelles, des espèces herbacées d'intérêt économique majeur (aussi bien des espèces céréalières, fruitières que potagères), mais aussi des espèces ligneuses (ornementales, forestières et fruitières).

Au niveau du champignon, cette interaction se manifeste par l'apparition de structures filamenteuses, appelées hyphes, qui se propagent en tout un réseau dans le sol. L'ensemble des hyphes du champignon forme le mycélium qui correspond à la structure assimilatrice du champignon.

Simultanément, le champignon se développe aussi dans les racines de la plante hôte. Il existe donc un continuum fongique entre le sol et les tissus racinaires. Grâce au réseau mycélien extraracinaire du champignon, la plante hôte dispose d'un plus grand volume d'exploration du sol pour s'approvisionner en eau et sels minéraux. Outre l'amélioration de l'apport hydrique et minéral dont profite la plante hôte, cette association symbiotique améliorerait également sa résistance aux pathologies racinaires.

Cette alliance fonctionnelle est également bénéfique pour les champignons MA qui ne peuvent vivre qu'en association avec des racines dont ils dépendent pour leur apport en substrats carbonés. Ainsi physiquement et fonctionnellement associés à la plante hôte, ces micro-organismes se multiplient dans le sol par dissémination de propagules (spores et/ou mycélium).

Depuis quelques années, on a tenté de mettre au point des techniques de symbiose dirigée permettant d'intensifier l'interaction bénéfique entre les champignons MA et de nombreuses espèces végétales cultivées, agricoles et forestières, de façon à améliorer l'apport hydrique et minéral de ces plantes hôtes, ainsi que leur résistance aux maladies racinaires. Ces techniques de symbiose dirigée ouvriront des perspectives prometteuses pour le développement de pratiques culturales plus respectueuses de l'environnement.

En particulier, l'épandage de champignons MA sur les sols de culture optimiserait leur teneur en ces micro-organismes bénéfiques pour la plante à cultiver, et permettrait par conséquent de réduire sensiblement les quantités d'engrais, notamment chimiques, ordinairement employés pour enrichir les sols, en particulier les phosphates et les nitrates qui contribuent en grande partie à la pollution des nappes phréatiques.

Toutefois, pour qu'un tel concept puisse s'appliquer aux grandes cultures, il faudrait pouvoir disposer d'une quantité importante de ces champignons MA, et de préférence sous forme de spores, plus faciles à manipuler et à stocker. Mais à l'heure actuelle, on ne connaît malheureusement aucune méthode capable de produire des spores de champignons MA en quantité suffisante pour une telle application.

De nombreuses techniques ont pourtant été proposées pour améliorer le développement et la croissance des champignons MA, notamment pour amplifier leur sporulation. Généralement basées sur une co-culture du champignon en présence d'une plante hôte entière en pot, ou *in vitro* en présence seulement de racines cultivées, ces techniques n'ont jusqu'à présent donné lieu qu'à des productions de propagules en quantités relativement faibles, insuffisantes pour une application agronomique à grande échelle.

La supplémentation du milieu de co-culture en exsudats racinaires, réputés être stimulateurs du développement des champignons MA, a également été envisagée (Bécard et al., Appl. Environ. Microbiol., 1989, 55:2320-25 ; Elias et al., Appl. Environ. Microbiol., 1987, 53:1928-33). Malheureusement, à l'heure actuelle, on ne dispose d'aucune méthode d'obtention de ces stimulateurs autre que la récupération "passive" et lente des exsudats produits et sécrétés progressivement par les racines des plantes. Egalement, les quantités ainsi recueillies sont tout juste suffisantes pour des expérimentations en laboratoire.

Du fait de la grande complexité de composition de ces exsudats, qui renferment des milliers de molécules allant des sucres simples, présents en grandes concentrations, aux molécules bien plus complexes, présentes à l'état de traces (voir notamment Walker et al., Plant Physiology, 2003, 132:44-51) et malgré les très nombreux travaux déjà menés sur ce sujet, le(s) facteur(s) réellement impliqué(s) dans la stimulation du développement et de la croissance des champignons MA, n'a(ont) toujours pas été identifié(s).

Dans ce contexte, l'invention vise à proposer de nouveaux facteurs de stimulation du développement et/ou de la croissance des champignons MA pour remédier à la très faible disponibilité de ces organismes.

L'invention a également pour principal objectif de proposer de tels facteurs de stimulation dont la disponibilité et l'accessibilité de certains d'entre eux ne constituent pas une limite quant à leur application à grande échelle, c'est-à-dire une application qui va au-delà de celle des paillasses de laboratoire ou d'une simple culture sous-serre.

En particulier, l'invention a pour intérêt d'améliorer la productivité des méthodes d'obtention, notamment à l'échelle industrielle, d'inoculum de champignons MA.

Dans tout le texte, par "inoculum", on entend toute forme de champignon MA susceptible de coloniser une plante hôte : spores, hyphes, vésicules, fragments de racines mycorhizées.

*In fine*, l'invention vise à améliorer les méthodes de mycorhization des plantes, notamment des plantes d'intérêt agronomique et/ou forestier, pour une culture intensive plus respectueuse de l'environnement.

Ainsi, l'invention concerne un procédé de traitement de champignons mycorhiziens à arbuscules, dits champignons MA, -notamment sous forme de spores- dans lequel on place au contact des champignons MA, au moins une quantité adaptée pour pouvoir stimuler le développement et/ou la croissance desdits champignons MA, d'au moins un agent de stimulation de structure choisie parmi :

| | |
|---|---|
| 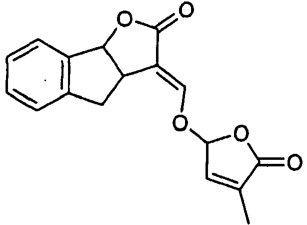 | 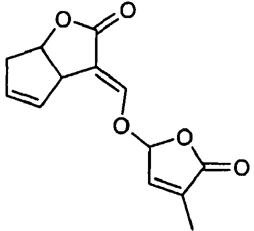 |
| GR24 (Mangnus et al., J. Agric. Food Chem., 1992, 40(6):697-700) | GR7 (Johnson et al., Weed Res., 1976, 16:223-227) |
| 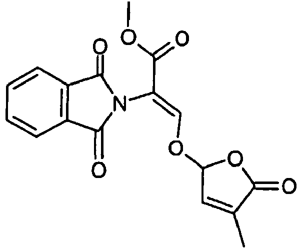 | 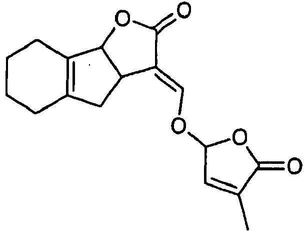 |
| Nijmegen 1 (Nefkens et al., J. Agric. Food Chem., 1997, 45(6):2273-2277) | Déméthylsorgolactone (Thuring et al., J. Agric. Food Chem., 1997,45(6):2278-2283) |
| 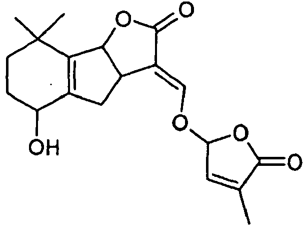 | 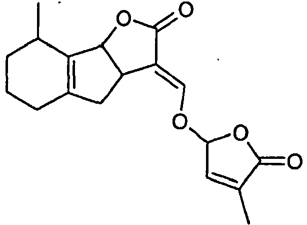 |
| Strigol (Cook et al., Science, 1966, 1954:1189-1190 ;) | Sorgolactone (Hauck et al., J. Plant Physiol., 1992, 139:474) |
| 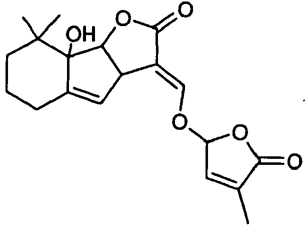 | 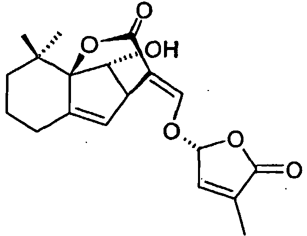 |
| Alectrol | |
| (Müller et al., J. Plant Physiol., 1992, 11:77) | (Wigchert et al., J. Agric. Food Chem., 1999, 47:1705-1710) |
| 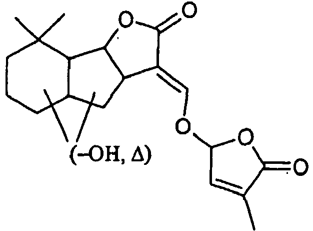 | |
| Orobanchol (Yokota et al., Phytochemistry, 1998, 49(7):1967-1973) | |

L'invention repose ainsi sur l'identification de composés de structure définie, ayant la capacité de stimuler la croissance et le développement des champignons mycorhiziens à arbuscules. En particulier, les travaux menés par les inventeurs ont effectivement révélé que des molécules déjà connues, GR7 et GR24, des analogues de synthèse de composés naturels appartenant à la famille des strigolactones, pouvaient avantageusement être utilisées à d'autres fins que l'élimination de plantes parasites.

En effet, les strigolactones (comme le strigol, l'alectrol, la sorgolactone, l'orobanchol), composés naturels extraits d'exsudats racinaires de différentes espèces végétales ont été initialement décrites comme des inducteurs de la germination des graines de plantes parasites des groupes *Striga* et *Orobanche* (Cook et al., Science, 1966, 1954:1189-1190 ; Cook et al., J. Amer. Chem. Soc.,1972, 94:6198-6911) particulièrement néfastes pour certaines cultures d'intérêt économique majeur comme celles du sorgho, du maïs, de la canne à sucre, des fèves... Avec les strigolactones, la germination suicide, une nouvelle approche dans la lutte contre les plantes parasites a pu être envisagée.

Concrétisée avec l'émergence d'analogues de synthèse, comme GR7 et GR24, plus faciles à obtenir que les composés naturels et donc plus propices à une application à échelle industrielle, la germination suicide consiste en un traitement des sols agricoles, susceptibles d'être infestés de plantes parasites, par des analogues de synthèse de strigolactones et ce, au moment où la plante à cultiver ne pousse pas encore dans lesdits sols. En disséminant lesdits analogues de synthèse, on provoque la germination des graines dormantes des plantes parasites lesquelles, n'ayant pas de plante hôte à infester, finissent par mourir par manque de nutrition (Jonhson et al., Weed Research, 1976, 16:223-227).

Alors que GR7 et GR24 étaient jusqu'à présent consacrés spécifiquement et uniquement à la germination suicide des graines de plantes parasites appartenant aux groupes *Striga* et *Orobanche*, l'invention propose une exploitation, jusqu'alors impensable, de ces molécules pour leur effet biologique inattendu sur les champignons MA, des micro-organismes de phylogénie très éloignée de celle des plantes *Striga et Orobanche.*

De manière jusqu'alors insoupçonnée, les inventeurs ont constaté que GR7 et GR24 entraînent une stimulation de la respiration cellulaire des spores des champignons MA et permettent d'amplifier le processus biologique de la ramification des hyphes de ces champignons. En traitant les spores par GR7 et/ou GR24, les inventeurs sont ainsi parvenus à stimuler la croissance et la ramification des champignons MA. Ces deux réponses physiologiques et morphologiques sont essentielles à l'établissement de l'interaction symbiotique entre les champignons MA et leurs plantes hôtes.

Ces travaux menés par les inventeurs permettent ainsi d'attester que l'effet de stimulation des exsudats racinaires sur le développement et la croissance des champignons MA, mis en évidence pour la première fois dans des travaux qui remontent au moins au début des années 80, provient au moins en partie des strigolactones, des composés qui, dans les exsudats racinaires, ne sont pourtant présents qu'en quantité infinitésimale. La sorgolactone (la strigolactone du sorgho), par exemple, a été isolée à partir d'exsudats racinaires recueillis à partir de 300 000 plants de sorgho, aboutissant à la purification de 5 µg de composés purifiés. Les quantités obtenues sont si faibles que la structure chimique de la sorgolactone n'a pu être définie qu'après synthèse chimique du composé et comparaison des spectres RMN. Pour la même raison, seules cinq strigolactones ont pu être caractérisées à l'heure actuelle.

L'invention repose ainsi sur le principe que des molécules de structure et de configuration particulières, notamment les molécules connues sous les appellations usuelles de GR7 et GR24, peuvent être utilisées à titre de facteurs de stimulation du développement et/ou de la croissance des champignons MA.

Le choix du facteur de stimulation du développement et/ou de la croissance des champignons MA pour la mise en oeuvre d'un procédé de traitement de champignons MA -notamment sous forme de spores- conforme à l'invention, ne se limite pas seulement à GR7 et GR24. Ce choix s'étend également aux strigolactones en général et, en particulier, au strigol, à l'alectrol, à la sorgolactone et à l'orobanchol.

De même, et selon toute vraisemblance, l'effet recherché avec GR7 et GR24, mais également avec les strigolactones en général, sur les champignons MA vient de la structure et de la configuration particulières des cycles référencés B, C, et D de ces molécules, comme ci-après indiqués avec la molécule de strigol.

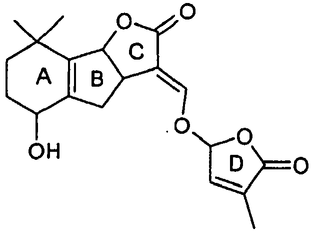

Aussi, les travaux des inventeurs montrent que tout composé de structure analogue à GR7, GR24 et aux strigolactones, c'est-à-dire tout composé reprenant la structure de l'enchaînement les cycles référencés B, C, et D des strigolactones (comme par exemple la déméthylsorgolactone) ou simplement leur configuration (comme par exemple le Nijmegen-1, un autre analogue de synthèse des strigolactones), peut être utilisé comme agent stimulateur du développement et/ou de la croissance des champignons MA, conformément à l'invention.

Avantageusement et selon l'invention, le traitement des champignons MA, ou inoculum de champignons MA, est réalisé de préférence sur des spores ou des fragments de racines mycorhizées.

Avantageusement et selon l'invention, on réalise ledit traitement en présence d'une matière végétale vivante, dite plante hôte, correspondant, au moins en partie, à une partie constitutive de racine d'une plante apte à former une symbiose avec des champignons MA.

Selon un mode particulier de mise en oeuvre d'un procédé selon l'invention, le traitement des champignons MA -notamment sous forme de spores ou de fragments de racines mycorhizées- est réalisé en milieu aseptique *in vitro.*

Selon un autre mode de mise en oeuvre d'un procédé selon l'invention, le traitement est avantageusement réalisé sur des cultures de plantes hôtes entières cultivées en pot. Mais, on peut aussi envisager de mettre en oeuvre l'invention à plus grand échelle, notamment sur des plantes hôtes entières cultivées en champ. On utilisera alors préférentiellement des composés de synthèse chimique, comme GR7 et GR24, qui présentent l'avantage, en comparaison avec les strigolactones, de pouvoir être disponibles en quantité suffisante et adaptée pour une application industrielle. Certains de ces composés, comme GR7 et GR24, sont déjà disponibles dans le commerce et/ou peuvent être synthétisés selon des protocoles déjà connus (Mangnus et al., J. Agric. Food Chem., 1992, 40(6):697=700 ; Mangnus et al., J. Agric. Food Chem., 1992, 40(7):1230-1235 ; Thuring et al., J. Agric. Food Chem., 1997, 45(6):2278-2283).

Avantageusement et selon l'invention, on utilise des champignons MA choisis parmi : *Glomus intraradices* et *Gigaspora rosea.*

L'invention s'étend aussi à un procédé pour produire de l'inoculum de champignons MA. A cet effet, on réalise une co-culture de champignons MA en présence d'une matière végétale vivante, dite plante hôte, correspondant, au moins en partie, à une partie constitutive de racine d'une plante apte à former une symbiose avec des champignons MA.

Par ailleurs et selon l'invention, on place également au contact de ladite co-culture, au moins une quantité adaptée pour pouvoir stimuler le développement et/ou la croissance desdits champignons MA, d'au moins un agent de stimulation de structure choisie parmi :

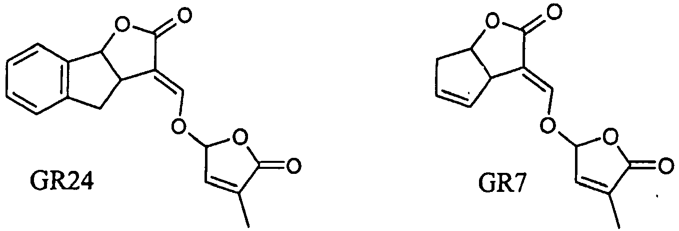

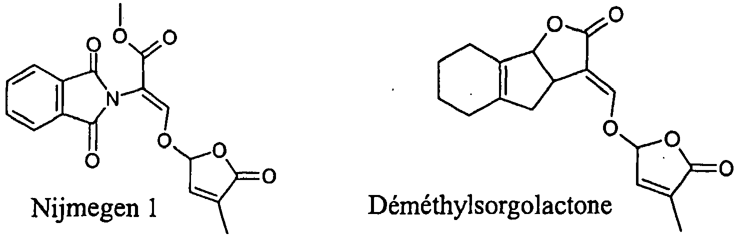

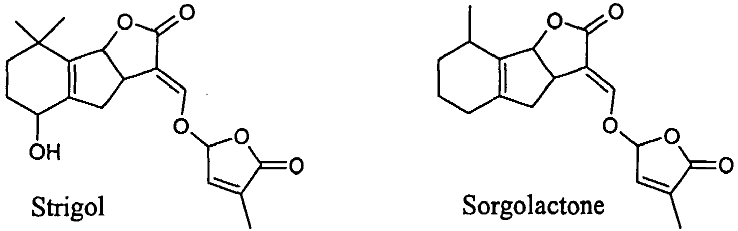

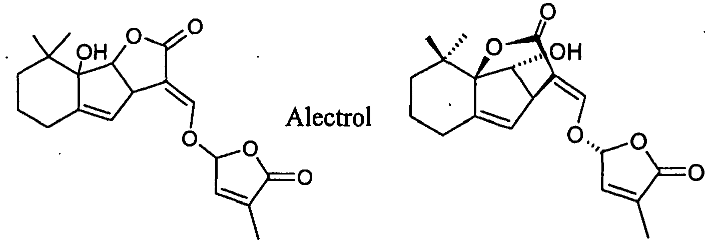

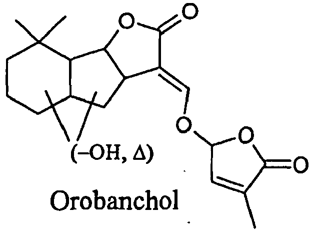

Avantageusement et selon l'invention, les champignons MA de ladite co-culture sont traités par un procédé de traitement de champignons MA -notamment sous forme de spores- conforme à au moins un des modes opératoires précédemment décrits.

De manière plus générale, l'invention peut avantageusement s'inscrire dans le cadre des problématiques de recherche visant à potentialiser la richesse minérale et hydrique naturelle des sols cultivables, essentiellement pour réduire l'usage habituel d'engrais chimiques, souvent sources de pollution par les phosphates et les nitrates.

L'invention, par la mise en évidence de facteurs dont certains sont déjà disponibles dans le commerce et capables de stimuler le développement et/ou la croissance des champignons MA, rend ainsi possible la mise en oeuvre, avantageusement à grande échelle, notamment à échelle industrielle, des techniques de mycorhization imaginées il y a plusieurs années mais dont l'application a été, jusqu'à présent, limitée par la faible disponibilité des spores et des autres formes d'inoculum de champignons MA, et par une méconnaissance de facteurs stimulant efficaces et facilement accessibles.

L'invention porte ainsi également sur un procédé de culture d'une plante hôte -en particulier, d'intérêt agronomique ou forestier- apte à former une symbiose avec des champignons MA. Pour ce faire, on réalise dans le milieu de culture un apport d'au moins un agent de stimulation du développement et/ou de la croissance des champignons MA choisi parmi : GR24, GR7, Nijmegen-1, la déméthylsorgolactone, le strigol, l'alectrol, la sorgolactone, l'orobanchol et leurs analogues structuraux.

Selon l'invention, l'apport de l'agent de stimulation est réalisé lors du semis des graines de la plante hôte à cultiver et/ou ultérieurement audit semis.

Dans le cas de la transplantation en terre de jeunes plantes préalablement obtenues (par exemple, par bouturage, microbouturage, marcottage, multiplication *in vitro*,...), l'apport de l'agent de stimulation au milieu de culture (sol de culture) est réalisé lors de ladite transplantation.

Avantageusement et selon l'invention, la plante hôte est cultivée en champ. Elle peut également être cultivée sous serre.

Lorsque la plante hôte est cultivée en champ, il se peut très bien que le sol utilisé contienne naturellement des champignons MA en quantité suffisante. Il n'est alors pas nécessaire de supplémenter d'avantage le champ en ces micro-organismes. Toutefois, il peut s'avérer qu'une telle supplémentation soit nécessaire, sous forme de spores ou autre forme d'inoculum de champignons MA.

Avantageusement et selon l'invention, on supplémente le sol en inoculum de champignons MA, notamment lors du semis, et/ou on procède à un apport répété d'agents de stimulation du développement et/ou de la croissance des champignons MA -notamment jusqu'à la récolte-.

Avantageusement et selon l'invention, pour la mise en culture, on utilise des semences de la plante hôte, encapsulées avec les agents de stimulation précédemment évoqués, au moyen d'un enrobage en un matériau adapté pour permettre le développement de plantules de ladite plante hôte et la libération desdits agents de stimulation, essentiellement lors des premiers arrosages.

L'invention s'étend à une composition comprenant en combinaison, une quantité de semence d'une plante hôte apte à former une symbiose avec des champignons MA, et une quantité d'agent de stimulation du développement et/ou de la croissance des champignons MA choisi parmi : GR24, GR7, Nijmegen-1, la déméthylsorgolactone, le strigol, l'alectrol, la sorgolactone, l'orobanchol et des analogues structuraux de ceux-ci.

Avantageusement et selon l'invention, ladite composition est formulée de façon à former un enrobé au moyen d'un matériau apte à se désagréger par contact avec un solvant, notamment l'eau.

Avantageusement, une composition selon l'invention comprend également une quantité de champignons MA, en particulier sous forme de spores -notamment de *Glomus intraradices* ou de *Gigaspora rosea*-.

L'invention porte également sur une composition comprenant en combinaison une quantité d'inoculum de champignons MA, en particulier des spores, et une quantité d'agent de stimulation du développement et/ou de la croissance des champignons MA choisi parmi : GR24, GR7, Nijmegen-1, la déméthylsorgolactone, le strigol, l'alectrol, la sorgolactone, l'orobanchol et des analogues structuraux de ceux-ci.

Avantageusement et selon l'invention, ladite composition est formulée de façon à former un enrobé au moyen d'un matériau apte à se désagréger par contact avec un solvant, notamment l'eau.

L'invention concerne aussi un procédé de traitement de champignons MA, un procédé pour produire de l'inoculum de champignons MA, un procédé de culture d'une plante hôte ainsi qu'une composition, caractérisés en combinaison par tout ou partie des caractéristiques ci-dessus et ci-après.

D'autres buts, caractéristiques et avantages de l'invention pourront également apparaître à la lecture de la description des analyses expérimentales suivantes.

Analyse 1 : Effet de GR24 sur l'activation de la respiration cellulaire de *Glomus intraradices.*

Des mesures polarographiques de la consommation d'oxygène ont été effectuées sur des spores de *Glomus intraradices* en germination, en présence ou non de GR24.

Pour ce faire, des spores de *Glomus intraradices* sont mises à germer dans du milieu minimum liquide, dit milieu M (le Tableau 1, ci-après, en présente la composition), pendant une semaine, à 30°C et dans une atmosphère enrichie à 2 % en CO₂. Par essai, on utilise 400 spores dans 1 ml de milieu M.

Pour la stimulation des spores, on ajoute à chaque essai 10 µl d'une solution de GR24 à 30 µM dans l'acétone (1 %), soit une concentration finale en GR24 de 0,3 µM. Les témoins reçoivent 10 µl d'acétone (1 %).

La consommation en oxygène est mesurée en utilisant une électrode à oxygène, dite électrode de Clark (Hansatech Ltd, Hardwick Industrial, Norfolk, Royaume-Uni), insérée dans une chambre en Plexiglas. L'électrode à oxygène est connectée à un enregistreur calibré entre 0 et 100 % avec l'oxygène atmosphérique.

Les spores sont installées dans la chambre et la température est maintenue à 30°C au moyen d'un bain d'eau circulant. Les taux de consommation en oxygène sont lus directement sur l'enregistreur. Les mesures de consommation d'oxygène se font sur 15 minutes, après 4h (série 1) et 5h30 (série 2) de stimulation.

**Tableau 1**

| CONSTITUANTS | Concentration finale (mg.1⁻¹) |
|---|---|
| MgSO₄,7H2O | 731 |
| KNO₃ | 80 |
| KCl | 65 |
| KH₂PO₄ | 4,8 |
| Ca(NO₃)₂, 4H2O | 288 |
| NaFe-EDTA | 8 |
| KI | 0,75 |
| MnCl₂, 4H2O | 6 |
| ZnSO₄, 7H2O | 2,65 |
| H₃BO₃ | 1,5 |
| CuSO₄, 5H2O | 0,13 |
| Na₂MoO₄, 2H₂O | 0,0024 |
| Glycine | 3 |
| Thiamine-HCl | 0,1 |
| Pyridoxine | 0,1 |
| Acide nicotinique | 0,5 |
| Myoinositol | 50 |
| Milieu complémenté en saccharose | 10 g.l⁻¹ |

Deux séries d'expérience indépendantes ont été réalisées. Pour chacune, les valeurs rapportées correspondent à la moyennes de 3 essais. Les résultats obtenus sont rapportés dans le Tableau 2 ci-après.

L'augmentation de la consommation en oxygène est exprimée en pourcentage par rapport à celle du témoin, traité à l'acétone.

**Tableau 2**

| | **% de stimulation** (moyenne sur 3 essais) |
|---|---|
| **Série 1** | 29,0 |
| **Série 2** | 76,6 |

Analyse 2 : Effet de GR7 sur l'activation de la respiration cellulaire de *Gigaspora rosea.*

Les expériences réalisées à l'oxygraphe dans les mêmes conditions qu'avec GR24 montrent que GR7 est actif sur la respiration de *Gigaspora rosea* à 0,1 µM final, après 5 heures de stimulation.

Le témoin est réalisé avec 10 µl de méthanol/eau (v/v) par ml de milieu.

Deux séries d'expérience indépendantes ont été réalisées, après 4h (série 1) et 5h30 (série 2) de stimulation.

Pour chacune, les valeurs rapportées correspondent à la moyennes de 3 essais. Les résultats obtenus sont présentés dans le Tableau 3 ci-après.

**Tableau 3**

| | **% de stimulation** (moyenne sur 3 essais) |
|---|---|
| **Série 1** | 24,0 |
| **Série 2** | 33,6 |

Analyse 3 : Effet de GR24 sur la stimulation de la ramification des hyphes de *Gigaspora rosea.*

La ramification stimulée des hyphes (apparition de nouveaux apex) est le test couramment employé pour évaluer l'activité stimulatrice de différents effecteurs sur les champignons endomycorhiziens du genre *Gigaspora.* Ce phénomène se produit naturellement à proximité des racines de plantes hôtes, ainsi que sous l'action des exsudats racinaires, et est considéré comme une phase préparatoire à la mise en place de la symbiose (Buée et al., Molecular Plant-Microbe Interaction, 2000, 13:693-698). Cette augmentation de ramification résulte d'une stimulation du métabolisme fongique, et conduit à une augmentation des points de contact entre le champignon et les racines de la plante. Toute augmentation de la ramification des hyphes du champignon augmente la mycorhization.

Des mesures de ramification (exprimées en nombre d'apex apparus après stimulation) des tubes germinatifs de *Gigaspora rosea* ont été réalisées en présence de différentes concentrations de GR24.

Pour ce faire, des spores de *Gigaspora rosea* sont mises à germer dans du milieu M gélosé (milieu M comprenant 0,4 % (p/v) de Phytagel® -SIGMA, France-), pendant 5 jours, à 30°C et dans une atmosphère enrichie à 2 % en CO₂. 10 µl d'agents à tester (en concentration variant de 10⁻⁸ à 10⁻¹⁵ M) en solution dans du méthanol 50 % sont alors apportés dans le milieu par adjonction dans un puits creusé dans la gélose.

Les témoins reçoivent dans les mêmes conditions, le solvant des molécules à tester (10 µl de méthanol à 50 %).

48 heures après le traitement, les apex formés au-dessus de la zone de stimulation sont comptabilisés. Deux séries d'expérience avec GR24, à différentes concentrations, ont été réalisées. Les résultats sont présentés dans le Tableau 4 ci-après.

**Tableau 4**

| **Concentration en GR24 (M)** | | **Nombre de spores traitées** | **Nombre d'apex néoformés** | **Apex/spore** | **Facteur de stimulation** |
|---|---|---|---|---|---|
| **Série 1** | | | | | |
| | Témoin | 2 | 6 | 3,0 | **1,0** |
| | 10⁻¹⁵ | 4 | 15 | 3,8 | **1,3** |
| | 10⁻¹² | 4 | 36 | 9,0 | **3,0** |
| | 10⁻¹⁰ | 3 | 45 | 15,0 | **5,0** |
| | 10⁻⁸ | 4 | 65 | 16,3 | **5,4** |

| **Série 2** | | | | | |
|---|---|---|---|---|---|
| | Témoin | 2 | 7 | 3,5 | **1,0** |
| | 10⁻¹⁵ | 2 | 17 | 8,5 | **2,4** |
| | 10⁻¹² | 4 | 34 | 8,5 | **2,4** |
| | 10⁻¹⁰ | 3 | 40 | 13,3 | **3,8** |
| | 10⁻⁸ | 1 | 14 | 14,0 | **4,0** |

Des doses submicromolaires de GR24 conduisent à une stimulation de la ramification d'un facteur 5. Avec des doses inférieures au picomolaire, on observe encore un effet stimulateur manifeste.

Analyse 4 : Effet de GR7 sur la stimulation de la ramification d'hyphe de *Gigaspora rosea.*

Des spores de *Gigaspora rosea* sont mises à germer dans un milieu M gélosé, pendant 5 jours à 30°C et dans une atmosphère enrichie à 2 % en CO₂. 10 µl de solution d'agents à tester sont alors apportés dans le milieu par adjonction dans un puits creusé dans la gélose, à partir d'une solution de concentration variant de 10⁻⁵ à 10⁻¹¹ M en agent à tester. Les témoins reçoivent dans les mêmes conditions, uniquement le solvant des agents à tester (10 µl de méthanol à 50 %).

Les apex formés sont comptabilisés au terme de 48 heures de traitement. Par ailleurs, l'activité d'élongation est évaluée par mesure du nombre de cm formés avant et après traitement. Deux séries d'expérience, à différentes concentrations de GR7, ont été réalisées. Les résultats obtenus sont présentés dans le Tableau 5 ci-après.

**Tableau 5**

| **Concentration en GR7 (M)** | | **Nombre de spores traitées** | **Nombre d'apex néoformés** | **Rapport de stimulation des ramifications** | **cm néoformés/ spore** | **Rapport de stimulation de la croissance** |
|---|---|---|---|---|---|---|
| **Série 1** | | | | | | |
| | Témoin | 4 | 1,75 | | 1,1 | 1,00 |
| | 10⁻¹¹ | 6 | 5,16 | 2,94 | 2,65 | 2,41 |
| | 10⁻⁹ | 5 | 8 | 4,57 | 2,62 | 2,38 |
| | 10⁻⁷ | 4 | 8,75 | 5 | 4,65 | 4,23 |
| | 10⁻⁵ | 6 | 9,3 | 5,31 | 4,88 | 4,44 |

| **Série 2** | | | | | | |
|---|---|---|---|---|---|---|
| | Témoin | 6 | 2,16 | | 2,49 | 1,00 |
| | 10⁻¹¹ | 3 | 2,66 | 1,23 | 2,23 | 0,89 |
| | 10⁻⁹ | 6 | 6,16 | 2,85 | 4,99 | 2,00 |
| | 10⁻⁷ | 7 | 10,42 | 4,82 | 5,09 | 2,04 |
| | 10⁻⁵ | 4 | 14,25 | 6,59 | 6,5 | 2,60 |

On constate que des doses de l'ordre du nanomolaire de GR7 sont significativement actives sur la ramification (nombre d'apex nouvellement formées) et sur l'élongation cellulaire.

Analyse 5 : Effet de GR7 sur la mycorhization de *Medicago truncatula* par *Gigaspora rosea.*

Des mesures du nombre de points de contact établis entre le champignon et les racines lors d'expériences de mycorhization *in vitro* ont été effectuées. Des plantes de *Medicago truncatula* ont été cultivées *in vitro* en présence de spores de *Gigaspora rosea,* sur du milieu M enrichi en GR7.

Pour les essais, du milieu M préparé comme précédemment est enrichi avec du GR7 à 0,1 µM en concentration finale. Les témoins sont réalisés avec du milieu M dans lequel du méthanol est ajouté à 0,1 % en concentration finale. Le milieu est coulé dans des boîtes de Petri carrées (100x100). Trois boîtes témoins et trois boîtes essais sont préparées. Les spores de *Gigaspora rosea* sont mises à pré-germer dans ces boîtes (25 par boîte) à l'étuve à 30°C, à 2 % en CO₂, pendant 6 jours. Les graines de *Medicago truncatula* sont stérilisées à l'eau de Javel à 8 degrés chlorimétrique pendant 5 minutes. Après rinçage à l'eau distillée stérile, elles sont mises à germer sur un milieu constitué d'Agar bactériologique de 1 µM de gibbérelline. Après 24 heures à 4°C, elles sont transférées dans une enceinte à 25°C pendant 24 heures. Dix huit plantules ainsi préparées sont alors réparties au hasard dans les six boîtes expérimentales contenant les spores en train de germer. Les boîtes sont disposées verticalement en chambre de culture (22°C, photopériode 16h/8h) pendant 3 semaines. Les plantules sont récoltées et les systèmes racinaires colorés à l'encre selon le protocole de Vierheilig (Vierheilig et al., Appl. Environ. Microbiol., 1998, 64:5004-5007).

Le nombre de points de contact établis entre le champignon et les racines est comptabilisé plante par plante après observation au microscope.

Les résultats obtenus sont présentés dans le tableau 6 ci-après :

**Tableau 6**

| | Nombre de plantes | Moyenne des points de contact | SEM |
|---|---|---|---|
| Témoin (méthanol) | 10 | 2,2 | 0,8 |
| Essai (GR7) | 8 | 7,75* | 2,11 |

| | | | |
|---|---|---|---|
| * Moyenne significativement différente (P=0,02, test de Mann-Whitney) | | | |

## Revendications

1. Procédé de traitement de champignons mycorhiziens à arbuscules, dits champignons MA, dans lequel on place au contact des champignons MA, au moins une quantité adaptée pour pouvoir stimuler le développement et/ou la croissance desdits champignons MA, d'au moins un agent de stimulation de structure choisie parmi :

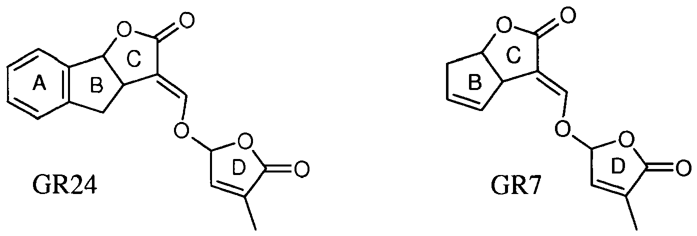

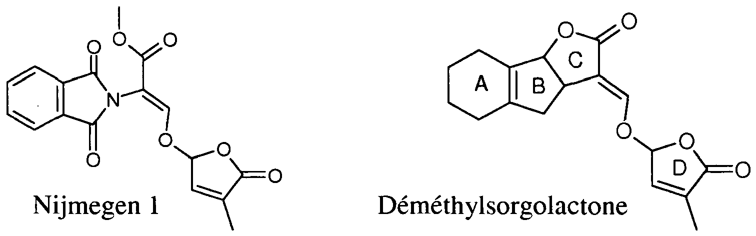

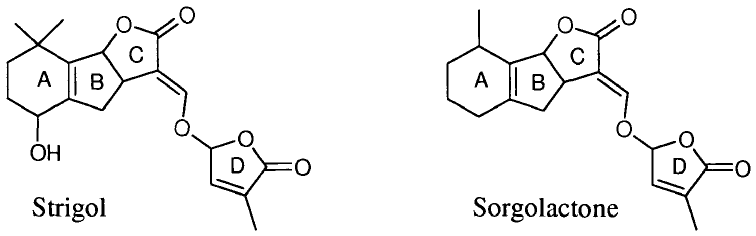

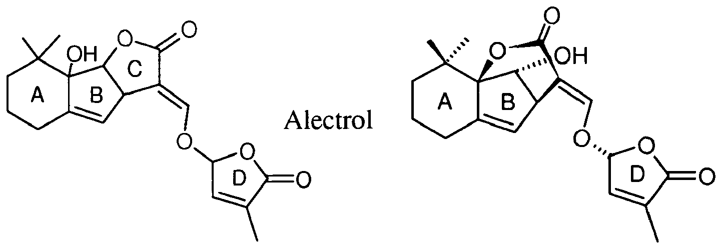

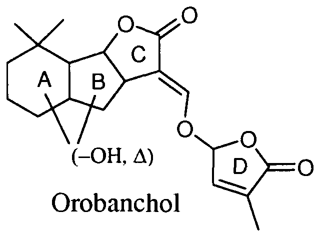

2. Procédé selon la revendication 1, **caractérisé en ce qu'**on réalise ledit procédé sur des champignons MA sous forme de spores.

3. Procédé selon la revendication 1, **caractérisé en ce qu'**on réalise ledit procédé sur des fragments de racines mycorhizées.

4. Procédé selon l'une des revendications 1 à 3, **caractérisé en ce qu'**on réalise ledit traitement des champignons MA en présence d'une matière végétale vivante, dite plante hôte, correspondant, au moins en partie, à une partie constitutive de racine d'une plante apte à former une symbiose avec des champignons MA.

5. Procédé selon l'une des revendications 1 à 4, **caractérisé en ce qu'**on réalise ledit traitement en milieu aseptique *in vitro.*

6. Procédé selon l'une des revendications 1 à 4, **caractérisé en ce qu'**on réalise ledit traitement sur au moins une plante hôte entière cultivée en pot.

7. Procédé selon l'une des revendications 1 à 4, **caractérisé en ce qu'**on réalise ledit traitement sur au moins une plante hôte entière cultivée en champ.

8. Procédé selon l'une des revendications 1 à 7, **caractérisé en ce qu'**on utilise des champignons MA choisis parmi : *Glomus intraradices* et *Gigaspora rosea.*

9. Procédé pour produire de l'inoculum de champignons mycorhiziens à arbuscules, dits champignons MA, dans lequel on réalise une co-culture de champignons MA en présence d'une matière végétale vivante, dite plante hôte, correspondant, au moins en partie, à une partie constitutive de racine d'une plante apte à former une symbiose avec des champignons MA,
**caractérisé en ce qu'**on place également au contact de ladite co-culture, au moins une quantité adaptée pour pouvoir stimuler le développement et/ou la croissance desdits champignons MA, d'au moins un agent de stimulation de structure choisie parmi :

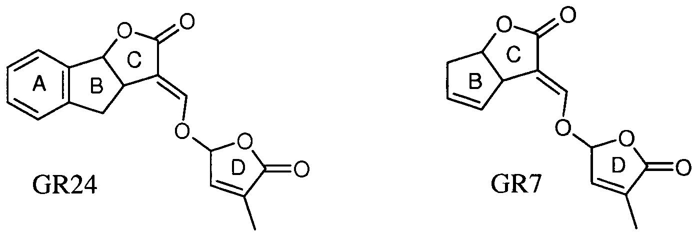

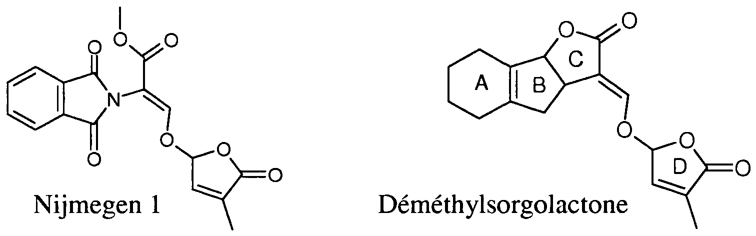

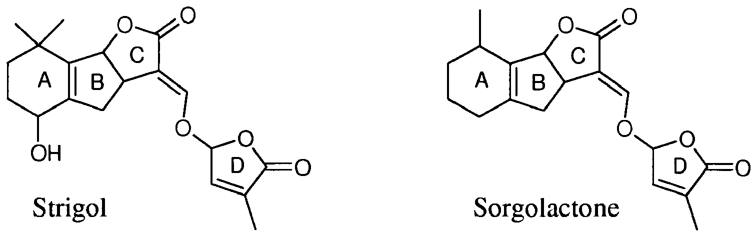

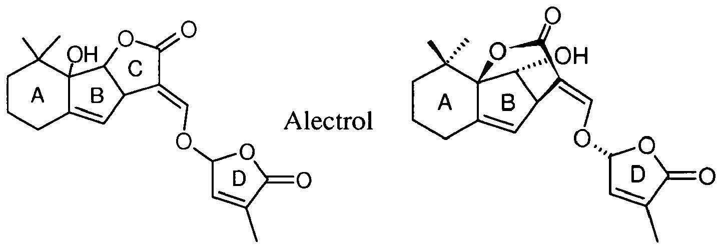

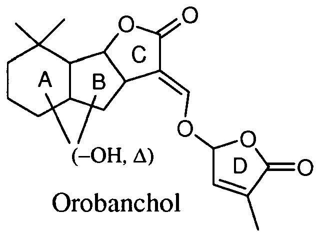

10. Procédé selon la revendication 9, dans lequel on traite les champignons MA de ladite co-culture par un procédé selon l'une des revendications 1 à 8.

11. Procédé de culture d'une plante hôte apte à former une symbiose avec des champignons mycorhiziens à arbuscules, dits champignons MA, **caractérisé en ce qu'**on réalise sur un sol de culture un apport d'au moins un agent de stimulation du développement et/ou de la croissance des champignons MA choisi parmi : 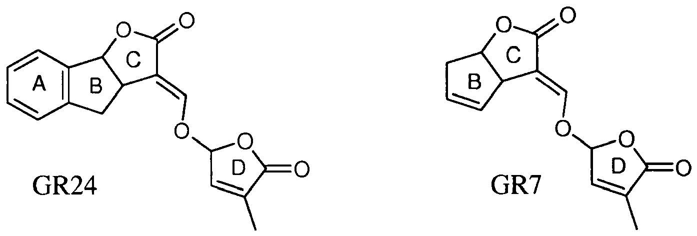 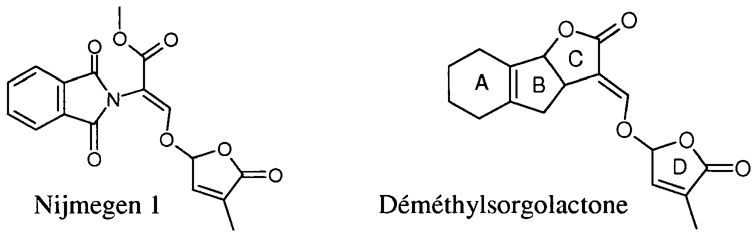 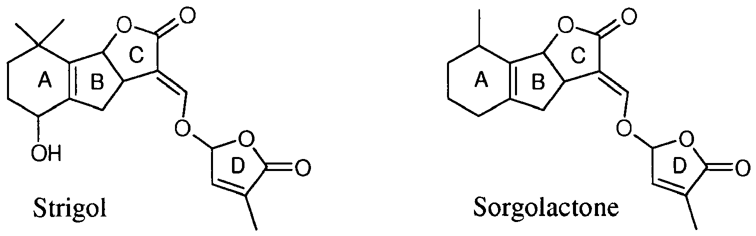 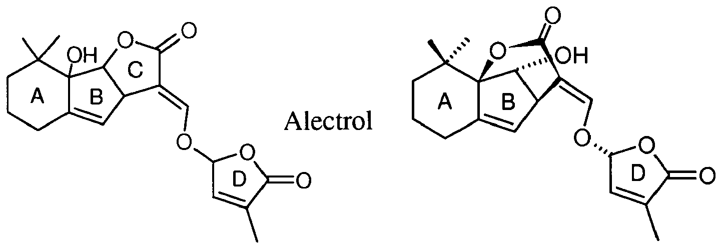 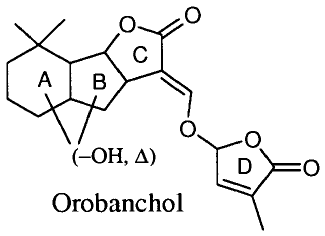 et **en ce que** ledit apport de l'agent de stimulation est réalisé lors du semis des graines de la plante hôte à cultiver et/ou ultérieurement audit semis, lesdits champignons MA étant naturellement présents sur ledit sol de culture.

12. Procédé de culture d'une plante hôte apte à former une symbiose avec des champignons mycorhiziens à arbuscules, dits champignons MA, **caractérisé en ce qu'**on réalise sur un sol de culture un apport d'au moins un agent de stimulation du développement et/ou de la croissance des champignons MA choisi parmi : 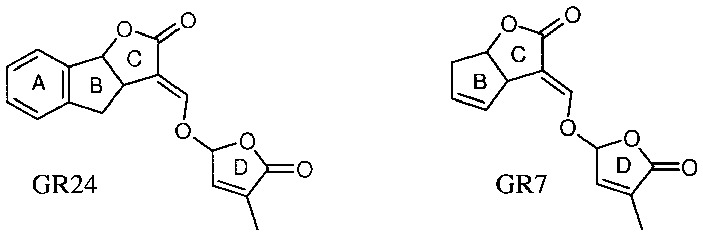 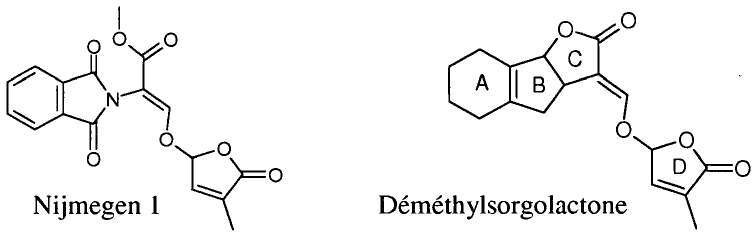 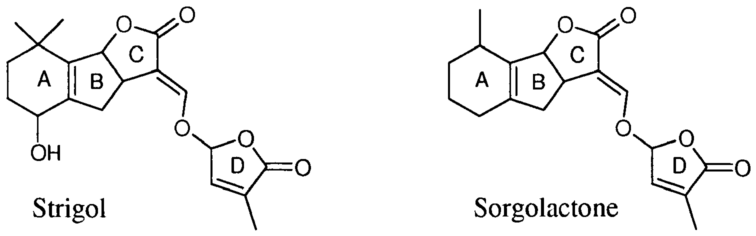 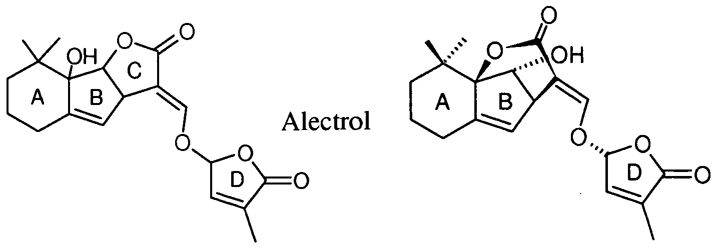 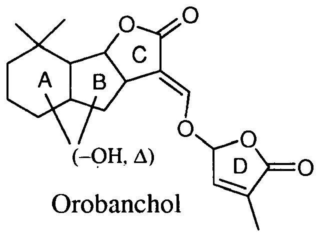 et **en ce que** ledit apport de l'agent de stimulation est réalisé lors du semis des graines de la plante hôte à cultiver et/ou ultérieurement audit semis et **en ce qu'**on supplémente le sol en inoculum de champignons MA.

13. Procédé selon l'une des revendications 11 ou 12, **caractérisé en ce que** la plante hôte est cultivée sous serre.

14. Procédé selon l'une des revendications 11 ou 12, **caractérisé en ce que** la plante hôte est cultivée en champ.

15. Procédé selon l'une des revendications 11 à 14, **caractérisé en ce qu'**on procède à un apport répété d'agents de stimulation du développement et/ou de la croissance desdits champignons MA.

16. Composition comprenant en combinaison une quantité de semence d'une plante hôte apte à former une symbiose avec des champignons MA, et une quantité d'agent de stimulation du développement et/ou de la croissance des champignons MA choisi parmi : GR24, GR7, Nijmegen-1, la déméthylsorgolactone, le strigol, l'alectrol, la sorgolactone, l'orobanchol.

17. Composition selon la revendication 16, **caractérisée en ce que** ladite composition est formulée de façon à former un enrobé au moyen d'un matériau apte à se désagréger par contact avec un solvant.

18. Composition selon l'une des revendications 16 ou 17, **caractérisée en ce qu'**elle comprend également une quantité d'inoculum de champignons MA.

19. Composition selon la revendication 18, **caractérisée en ce qu'**il s'agit d'inoculum de champignons MA choisis parmi : *Glomus intraradices* et *Gigaspora rosea.*

20. Composition comprenant en combinaison, une quantité d'inoculum de champignons MA, et une quantité d'agent de stimulation du développement et/ou de la croissance des champignons MA choisi parmi : GR24, GR7, Nijmegen-1, la déméthylsorgolactone, le strigol, l'alectrol, la sorgolactone, l'orobanchol.

21. Composition selon la revendication 20, **caractérisée en ce qu'**elle est formulée de façon à former un enrobé au moyen d'un matériau apte à se désagréger par contact avec un solvant.

## Patentansprüche

1. Verfahren zur Behandlung von arbuskulären Mykorrhiza-Pilzen, genannt MA-Pilze, wobei mindestens eine Menge mindestens eines Mittels zur Stimulierung der Struktur in Kontakt mit den MA-Pilzen gebracht wird, die ausgelegt ist, um die Entwicklung und/oder das Wachstum der MA-Pilze zu stimulieren, ausgewählt aus:

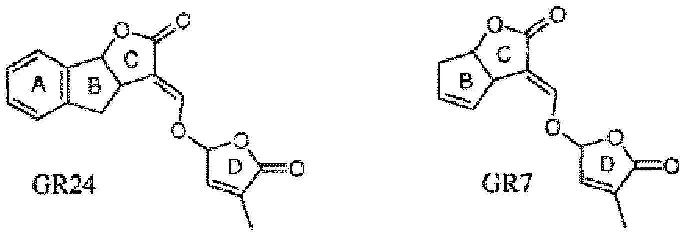

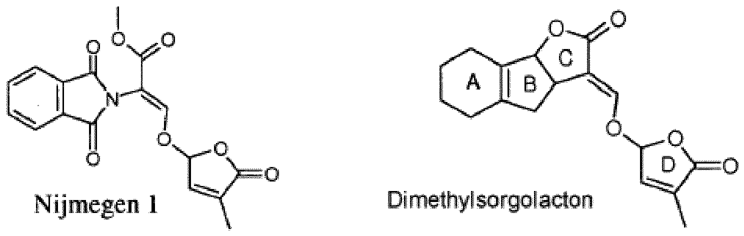

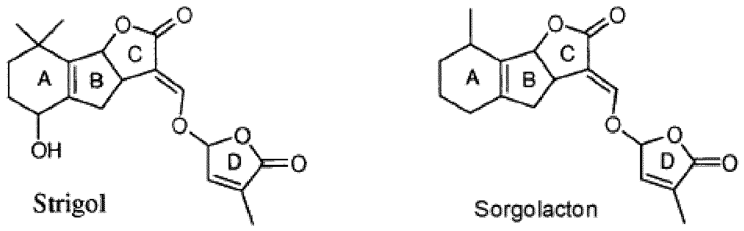

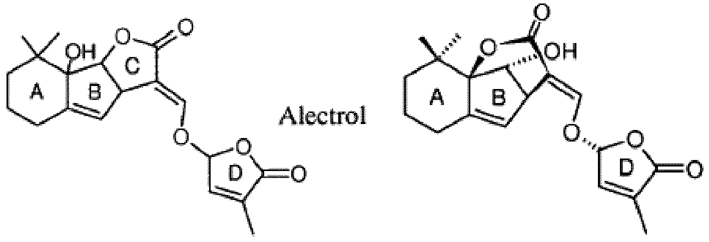

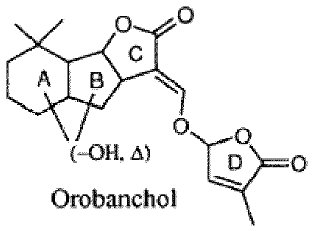

2. Verfahren nach Anspruch 1, **dadurch gekennzeichnet, dass** das Verfahren an MA-Pilzen in der Form von Sporen durchgeführt wird.

3. Verfahren nach Anspruch 1, **dadurch gekennzeichnet, dass** das Verfahren an Fragmenten von Mykorrhiza-Wurzeln durchgeführt wird.

4. Verfahren nach einem der Ansprüche 1 bis 3, **dadurch gekennzeichnet, dass** die Behandlung der MA-Pilze in Anwesenheit eines lebenden pflanzlichen Materials, genannt Wirtspflanze, durchgeführt wird, das mindestens teilweise einem wesentlichen Teil der Wurzel einer Pflanze entspricht, die ausgelegt ist, um eine Symbiose mit MA-Pilzen zu bilden.

5. Verfahren nach einem der Ansprüche 1 bis 4, **dadurch gekennzeichnet, dass** die Behandlung in einer aseptischen in vitro-Umgebung durchgeführt wird.

6. Verfahren nach einem der Ansprüche 1 bis 4, **dadurch gekennzeichnet, dass** die Behandlung an mindestens einer Wirtspflanze durchgeführt wird, die vollständig im Topf kultiviert wird.

7. Verfahren nach einem der Ansprüche 1 bis 4, **dadurch gekennzeichnet, dass** die Behandlung an mindestens einer Wirtspflanze durchgeführt wird, die vollständig auf dem Feld kultiviert wird.

8. Verfahren nach einem der Ansprüche 1 bis 7, **dadurch gekennzeichnet, dass** MA-Pilze verwendet werden, die aus Folgendem ausgewählt sind: *Glomus intraradices* und *Gigaspora rosea.*

9. Verfahren zur Herstellung von Impfmaterial aus arbuskulären Mykorrhiza-Pilzen, genannt MA-Pilze, wobei eine Co-Kultur von MA-Pilzen in Anwesenheit eines lebenden pflanzlichen Materials, genannt Wirtspflanze, durchgeführt wird, das mindestens teilweise einem wesentlichen Teil der Wurzel einer Pflanze entspricht, die ausgelegt ist, um eine Symbiose mit MA-Pilzen zu bilden, **dadurch gekennzeichnet, dass** auch mindestens eine Menge mindestens eines Mittels zur Stimulierung der Struktur in Kontakt mit der Co-Kultur gebracht wird, die ausgelegt ist, um die Entwicklung und/oder das Wachstum der MA-Pilze zu stimulieren, ausgewählt aus:

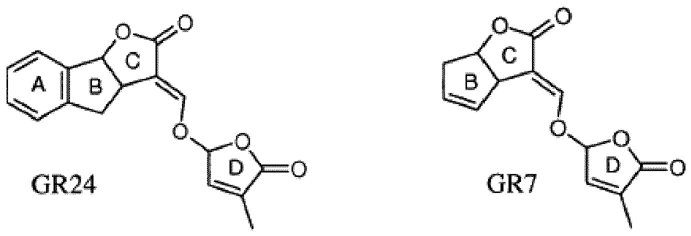

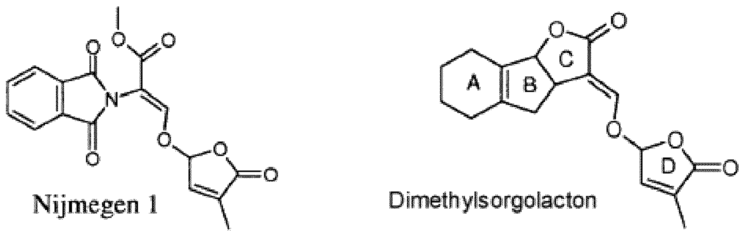

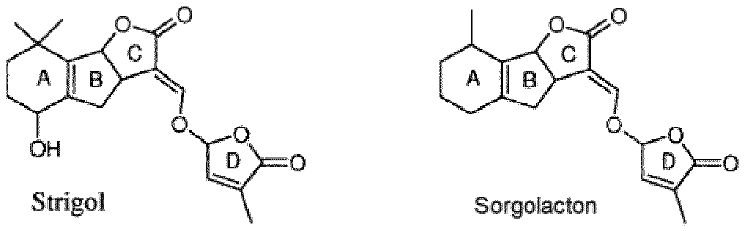

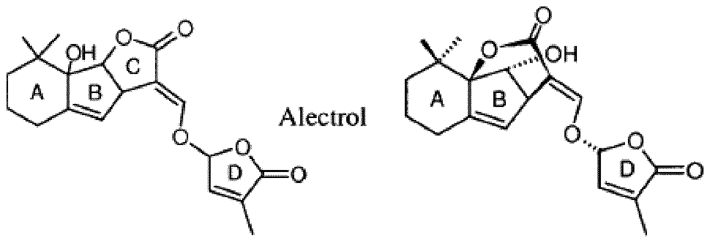

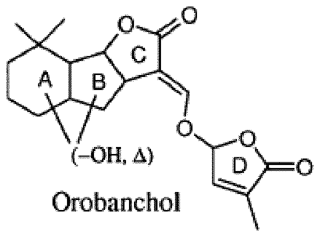

10. Verfahren nach Anspruch 9, wobei die MA-Pilze der Co-Kultur durch ein Verfahren nach einem der Anspruche 1 - 8 behandelt werden.

11. Verfahren zur Kultivierung einer Wirtspflanze, die ausgelegt ist, um eine Symbiose mit arbuskulären Mykorrhiza-Pilzen, genannt MA-Pilze, zu bilden, **dadurch gekennzeichnet, dass** auf einem Kulturboden ein Eintrag von mindestens einem Mittel zur Stimulierung der Entwicklung und/oder des Wachstums der MA-Pilze durchgeführt wird, ausgewählt aus: 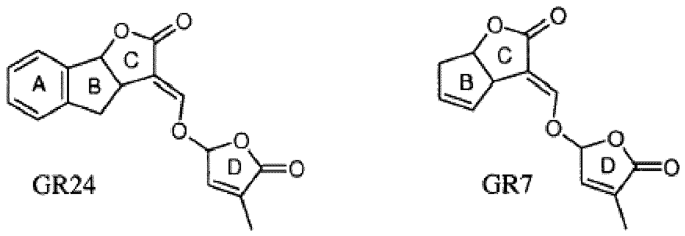 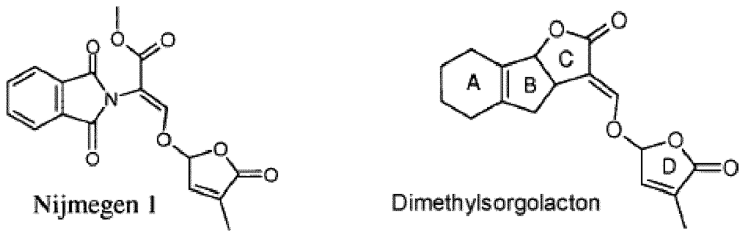 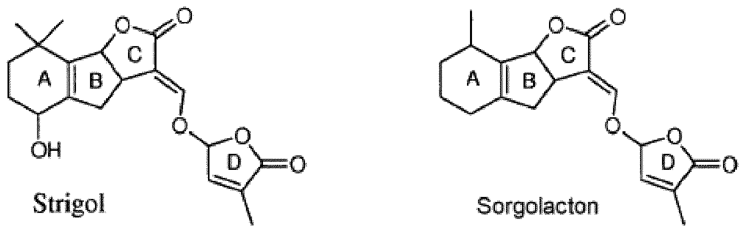 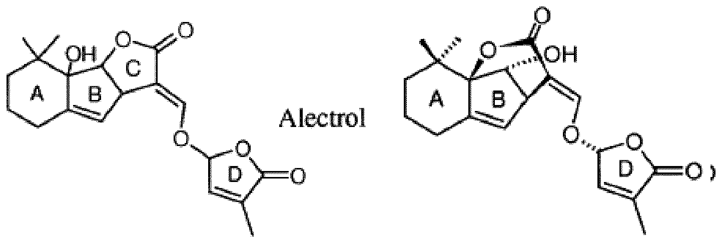 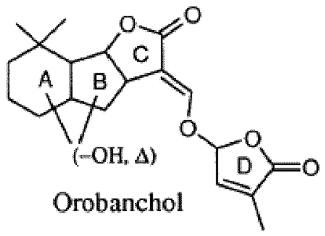 und dadurch, dass der Eintrag des Mittels zur Stimulierung bei der Saat von Körnern der zu kultivierenden Wirtspflanze und/oder nach der Saat durchgeführt wird, wobei die MA-Pilze natürlich auf dem Kulturboden vorhanden sind.

12. Verfahren zur Kultivierung einer Wirtspflanze, die ausgelegt ist, um eine Symbiose mit arbuskulären Mykorrhiza-Pilzen, genannt MA-Pilze, zu bilden, **dadurch gekennzeichnet, dass** auf einem Kulturboden ein Eintrag von mindestens einem Mittel zur Stimulierung der Entwicklung und/oder des Wachstums der MA-Pilze durchgeführt wird, ausgewählt aus: 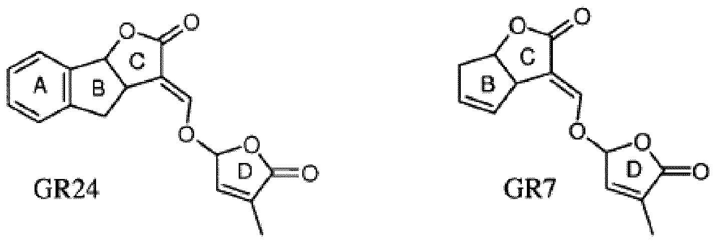 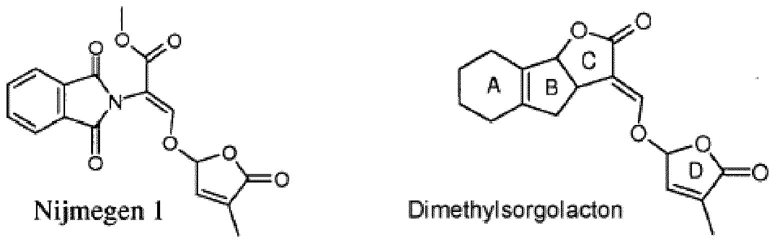 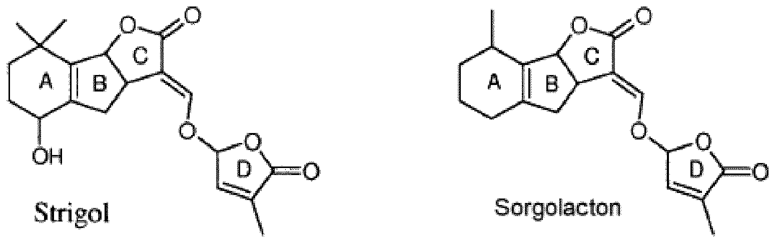 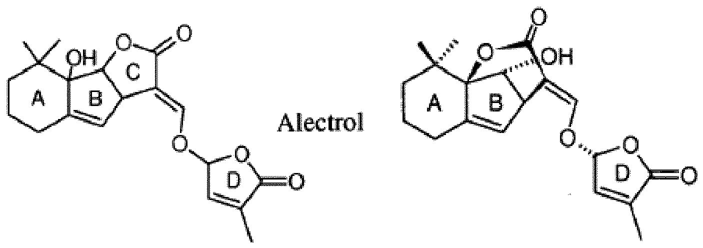 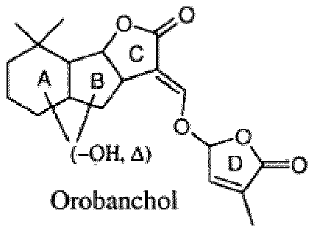 und dadurch, dass der Eintrag des Mittels zur Stimulierung bei der Saat von Körnern der zu kultivierenden Wirtspflanze und/oder nach der Saat durchgeführt wird, und dadurch, dass der Boden mit Impfmaterial von MA-Pilzen versetzt wird.

13. Verfahren nach einem der Ansprüche 11 oder 12, **dadurch gekennzeichnet, dass** die Wirtspflanze im Treibhaus kultiviert wird.

14. Verfahren nach einem der Ansprüche 11 oder 12, **dadurch gekennzeichnet, dass** die Wirtspflanze auf dem Feld kultiviert wird.

15. Verfahren nach einem der Ansprüche 11 bis 14, **dadurch gekennzeichnet, dass** ein wiederholter Eintrag von Mitteln zur Stimulierung der Entwicklung und/oder des Wachstums der MA-Pilze durchgeführt wird.

16. Zusammensetzung, umfassend in Kombination eine Menge von Samen einer Wirtspflanze, die ausgelegt ist, um eine Symbiose mit MA-Pilzen zu bilden, und eine Menge eines Mittels zur Stimulierung der Entwicklung und/oder des Wachstums der MA-Pilze, ausgewählt aus: GR24, GR7, Nijmegen-1, Dimethylsorgolacton, Strigol, Alectrol, Sorgolacton, Orobanchol.

17. Zusammensetzung nach Anspruch 16, **dadurch gekennzeichnet, dass** die Zusammensetzung so formuliert ist, dass sie mit Hilfe eines Materials, das ausgelegt ist, um sich durch den Kontakt mit einem Lösemittel zu zersetzen, eine Umhüllung bildet.

18. Zusammensetzung nach einem der Ansprüche 16 oder 17, **dadurch gekennzeichnet, dass** sie auch eine Menge von Impfmaterial von MA-Pilzen umfasst.

19. Zusammensetzung nach Anspruch 18, **dadurch gekennzeichnet, dass** es sich um Impfmaterial von MA-Pilzen handelt, ausgewählt aus: *Glomus intraradices* und *Gigaspora rosea.*

20. Zusammensetzung, umfassend in Kombination eine Menge von Impfmaterial von MA-Pilzen und eine Menge eines Mittels zur Stimulierung der Entwicklung und/oder des Wachstums der MA-Pilze, ausgewählt aus: GR24, GR7, Nijmegen-1, Dimethylsorgolacton, Strigol, Alectrol, Sorgolacton, Orobanchol.

21. Zusammensetzung nach Anspruch 20, **dadurch gekennzeichnet, dass** sie so formuliert ist, dass sie mit Hilfe eines Materials, das ausgelegt ist, um sich durch den Kontakt mit einem Lösemittel zu zersetzen, eine Umhüllung bildet.

## Claims

1. Method of treating arbuscular mycorrhizal fungi, known as AM fungi, in which AM fungi are brought into contact with at least one stimulating agent in at least an amount that is suitable for stimulating the development and/or growth of said AM fungi, said stimulating agent having a structure selected from:

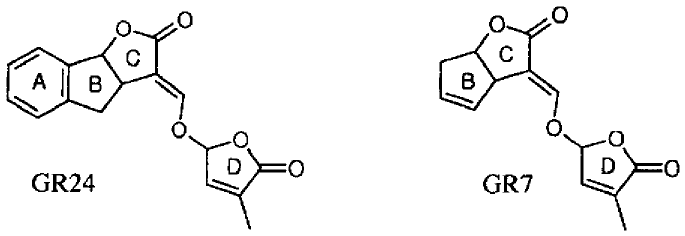

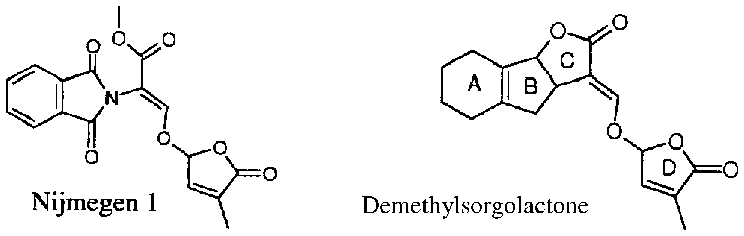

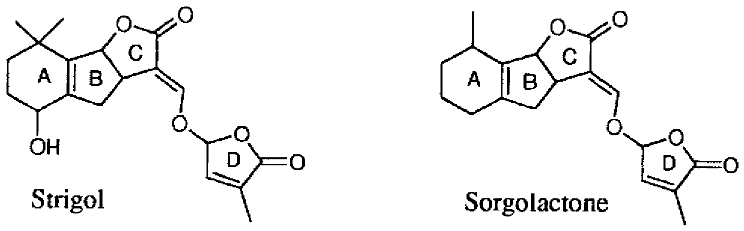

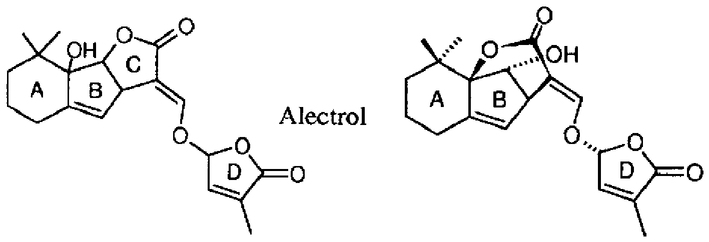

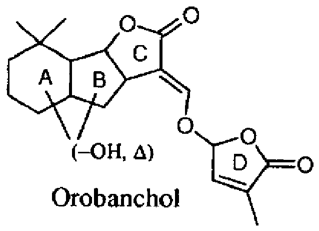

2. Method according to claim 1, **characterised in that** said method is carried out on AM fungi in the form of spores.

3. Method according to claim 1, **characterised in that** said method is carried out on mycorrhizated root fragments.

4. Method according to any one of claims 1 to 3, **characterised in that** said treatment of the AM fungi is carried out in the presence of living plant material, known as the host plant, corresponding, at least partly, to a constitutive root part of a plant capable of forming a symbiosis with AM fungi.

5. Method according to any one of claims 1 to 4, **characterised in that** said treatment is carried out in an aseptic medium *in vitro.*

6. Method according to any one of claims 1 to 4, **characterised in that** said treatment is carried out on at least one whole host plant cultivated in a pot.

7. Method according to any one of claims 1 to 4, **characterised in that** said treatment is carried out on at least one whole host plant cultivated in the field.

8. Method according to any one of claims 1 to 7, **characterised in that** AM fungi selected from: *Glomus intraradices* and *Gigaspora rosea* are used.

9. Method of producing inoculum of arbuscular mycorrhizal fungi, known as AM fungi, in which a co-culture of AM fungi is prepared in the presence of living plant material, known as the host plant, corresponding, at least partly, to a constitutive root part of a plant capable of forming a symbiosis with AM fungi, **characterised in that** said co-culture is also brought into contact with at least one stimulating agent in at least an amount that is suitable for stimulating the development and/or growth of said AM fungi, said stimulating agent having a structure selected from:

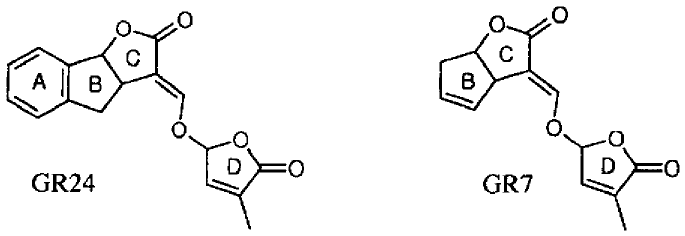

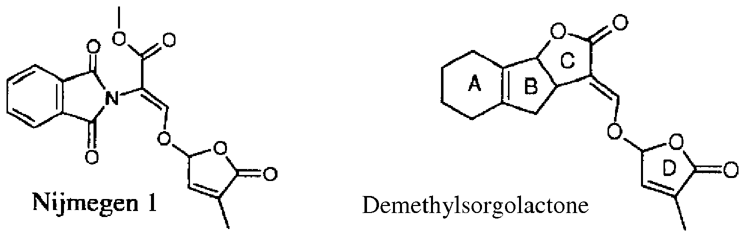

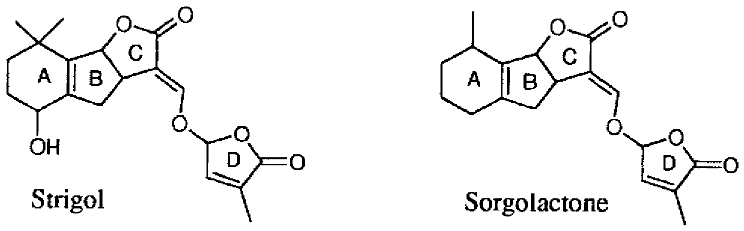

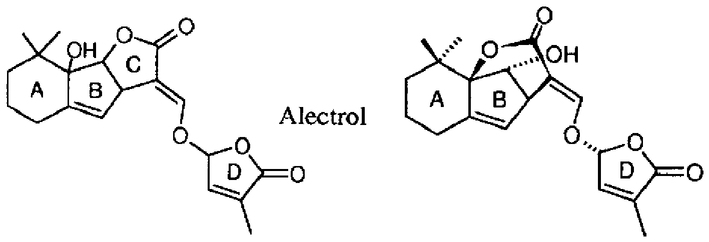

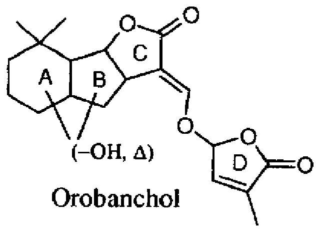

10. Method according to claim 9, **characterised in that** the AM fungi of said co-culture are treated by a method according to any one of claims 1 to 8.

11. Method of cultivating a host plant capable of forming a symbiosis with arbuscular mycorrhizal fungi, known as AM fungi, **characterised in that** there is added to a cultivation soil at least one agent for stimulating the development and/or growth of AM fungi, which agent is selected from: 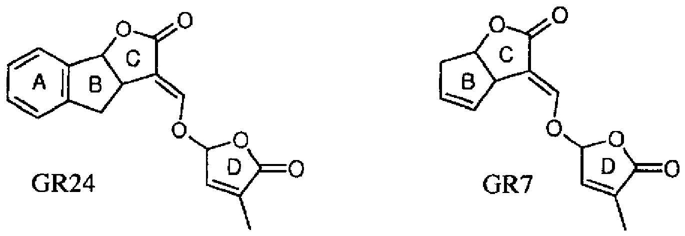 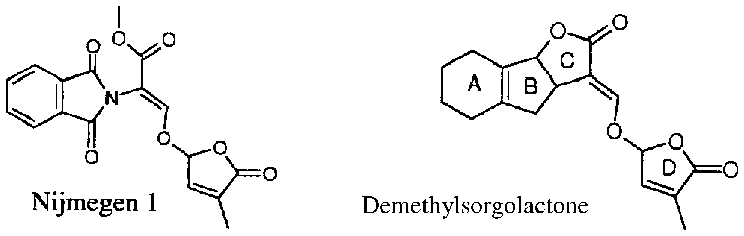 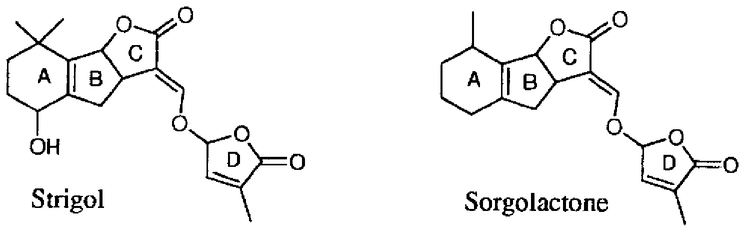 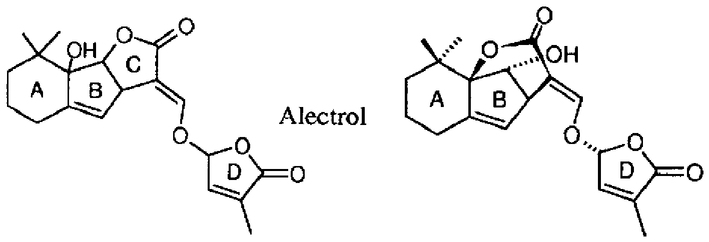 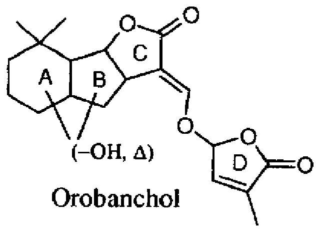 and **in that** the stimulating agent is added at the time of sowing of the seeds of the host plant that is to be cultivated and/or subsequently to said sowing, said AM fungi being naturally present in said cultivation soil.

12. Method of cultivating a host plant capable of forming a symbiosis with arbuscular mycorrhizal fungi, known as AM fungi, **characterised in that** there is added to a cultivation soil at least one agent for stimulating the development and/or growth of AM fungi, which agent is selected from: 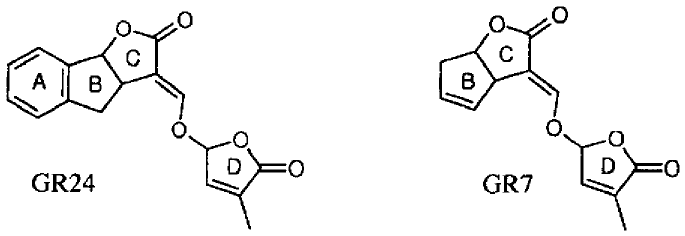 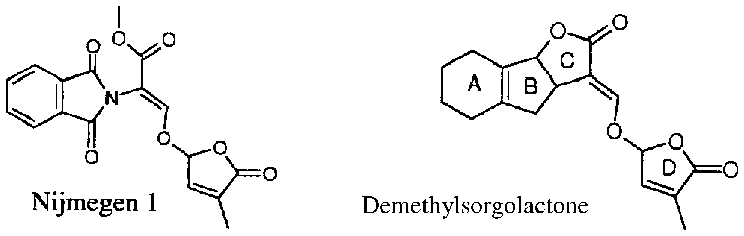 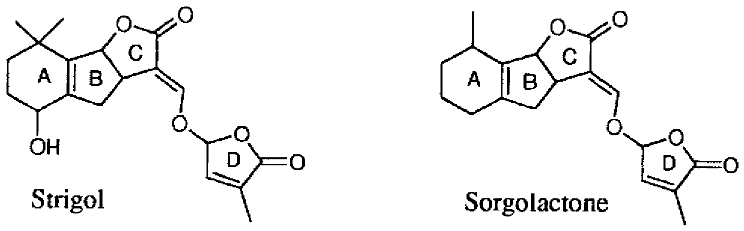 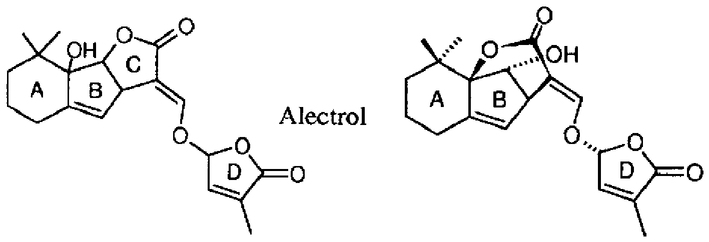 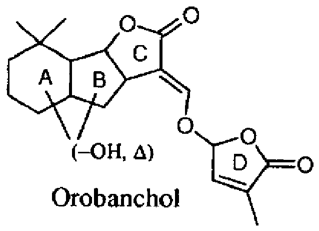 and **in that** the stimulating agent is added at the time of sowing of the seeds of the host plant that is to be cultivated and/or subsequently to said sowing, and **in that** the soil is supplemented with AM fungus inoculum.

13. Method according to either claim 11 or claim 12, **characterised in that** the host plant is cultivated in a greenhouse.

14. Method according to either claim 11 or claim 12, **characterised in that** the host plant is cultivated in the field.

15. Method according to any one of claims 11 to 14, **characterised in that** agents for stimulating the development and/or growth of said AM fungi are added repeatedly.

16. Composition comprising, in combination, a quantity of seeds of a host plant capable of forming a symbiosis with AM fungi, and a quantity of agent for stimulating the development and/or growth of AM fungi, which agent is selected from: GR24, GR7, Nijmegen-1, demethylsorgolactone, strigol, alectrol, sorgolactone, orobanchol.

17. Composition according to claim 16, **characterised in that** said composition is formulated so as to form a coating by means of a material capable of disintegrating on contact with a solvent.

18. Composition according to either claim 16 or claim 17, **characterised in that** it also comprises a quantity of AM fungus inoculum.

19. Composition according to claim 18, **characterised in that** the inoculum is inoculum of AM fungi selected from: *Glomus intraradices* and *Gigaspora rosea.*

20. Composition comprising, in combination, a quantity of AM fungus inoculum and a quantity of agent for stimulating the development and/or growth of AM fungi, which agent is selected from: GR24, GR7, Nijmegen-1, demethylsorgolactone, strigol, alectrol, sorgolactone, orobanchol.

21. Composition according to claim 20, **characterised in that** it is formulated so as to form a coating by means of a material capable of disintegrating on contact with a solvent.
